**Europäisches Patentamt**

**European Patent Office**

**Office européen des brevets**

(11) Publication number : **0 508 749 A2**

## EUROPEAN PATENT APPLICATION

(21) Application number : **92303112.4**

(22) Date of filing : **08.04.92**

(51) Int. Cl.⁵ : **G01N 1/00**

(30) Priority : **12.04.91 JP 33356/91**

(43) Date of publication of application :
**14.10.92 Bulletin 92/42**

(84) Designated Contracting States :
**DE FR GB IT**

(71) Applicant : **TOA MEDICAL ELECTRONICS CO.,
LTD.**
**2-1, Minatojima, Nakamachi 7-chome
Chuoku, Kobe (JP)**

(72) Inventor : **Koyama, Motoki**
**Toa Iyodenshi Koberyo, 16-3, Kojidai 4-chome
Nishiku, Kobe (JP)**

(74) Representative : **Price, Paul Anthony King
D. Young & Co. 10 Staple Inn
London WC1V 7RD (GB)**

(54) **Sampling valve.**

(57)   The sampling valve is used for sampling blood and the like for an automatic analyzing apparatus. It has a movable element (14) between a pair of fixed elements (10, 12). To prevent frictional sticking, lubricant is provided in a reservoir (27) around the movable element (14) and a recess (15) extends round the outer periphery of each pair of abutting sliding surfaces (10b, 14a, 14b, 12a) of the fixed and movable elements (10, 12, 14). Each recess (15) has walls which diverge as they lead away from the outer periphery of the associated pair of sliding surfaces. This helps to direct lubricant between the fixed and movable elements (10, 12, 14). An enclosure (24) defines the reservoir (27) and has an opening (25) out of which extends an arm (28) that is used to rotate the movable element (14). Only a small force is required to rotate the arm (28).

FIG.3

The present invention relates to a sampling valve for sampling a liquid specimen, such as blood, for an automatic analyzing apparatus.

In an automatic analyzing apparatus such as a blood analyzer, a valve called a sampling valve has hitherto been used for measuring and distributing liquid specimens.

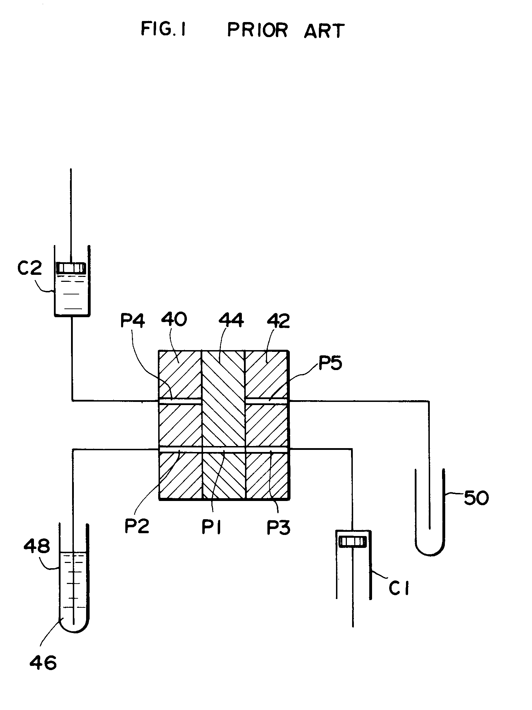

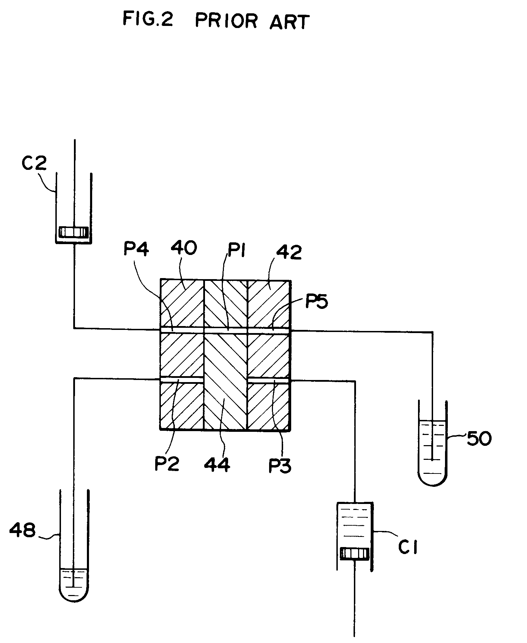

Figs. 1 and 2 are diagrams which explain the operation of a conventional sampling valve. The sampling valve has fixed elements 40, 42 and a rotary element 44, and operates as described below.

The sampling valve has a first state (sample suction state) as shown in Fig. 1 and a second state (sample delivery state) as shown in Fig. 2. In the first state (Fig. 1), a through hole P1 provided in the rotary element 44 communicates with through holes P2, P3 provided in the fixed elements 40, 42. At this time, as a suction cylinder C1 operates, a specimen 46 in a container 48 is sucked up, and the through hole P1 is filled with a specific amount of specimen.

Then, the rotary element 44 rotates through a specific angle to move into the second state (Fig. 2). The through hole P1 in the rotary element 44 now communicates with other through holes P4, P5 provided in the fixed elements 40, 42.

As a metering cylinder C2 operates in discharge mode, the specific amount of specimen contained in the through hole P1 is pushed out into a container 50 together with a specific amount of diluting solution. Thus, a diluted specimen of a specified concentration is prepared in the container 50.

In the sampling valve, the mutually contacting and rubbing surfaces (called sliding surfaces hereinafter) of the fixed elements and rotary element must have a very smooth mirror surface. Otherwise, if the sliding surfaces are damaged or rough, liquid will escape from the outer circumference of the sliding surfaces, and the quantitative determination may be wrong.

However, if the sliding surfaces are nearly perfectly flat, the fixed elements and the rotary element stick to each other and the rotary element cannot rotate.

To prevent sticking, one of the sliding surfaces has a very slight curvature. If the degree of curvature is excessive, however, liquid escapes.

To prevent sticking in a sampling valve having very flat sliding surfaces, the sampling valve of Japanese Laid-open Utility Model Sho. 62-197040 has a cylinder which encloses the fixed and rotary elements. The gap between the cylinder and rotary element is filled with liquid which acts as a lubricant. Because the periphery of the rotary element is enclosed by the cylinder, the rotary element has to be rotated by a central drive shaft. It is difficult to fix the drive shaft to the rotary element with high precision. Also, because the drive shaft has a small diameter a large force is needed to rotate the rotary element.

According to the present invention, there is provided a sampling valve for sampling a liquid specimen, comprising: a movable element which has at least one liquid specimen distribution hole and is positioned between two fixed elements having liquid specimen distribution holes; a liquid chamber extending round the outer periphery of at least one pair of sliding surfaces of the fixed and movable elements; and a recess for each pair of sliding surfaces, the recess having walls which diverge as they extend away from the outer periphery of the pair of sliding surfaces. Because of the diverging walls of the recess(es), lubricant in the liquid chamber is more easily able to permeate between the movable and fixed elements to prevent sticking of the movable element.

Preferably, the movable element is a rotatable element and the sampling valve has an arm extending outwardly from the movable element to permit rotation thereof. Only a small force needs to be applied to the arm by a driving source to effect the desired rotation of the movable element.

The invention will now be described by way of non-limiting embodiments with reference to the accompanying drawings, in which:

Fig. 1 is a diagram which shows a first state (specimen delivery state) of the conventional sampling valve;

Fig. 2 is a diagram which shows a second state (specimen delivery state) of the conventional sampling valve of Fig. 1;

Fig. 3 is a partially cut-away sectional view of the main parts of a sampling valve in accordance with the present invention;

Fig. 4 is a sectional view in the direction of arrow 4 of Fig. 3;

Fig. 5 is a magnified sectional view showing sliding surfaces of fixed and rotary elements of a sampling valve in accordance with the present invention;

Fig. 6 shows an alternative to Fig. 5; and

Fig. 7 is a diagram showing the entire sampling valve of Fig. 3.

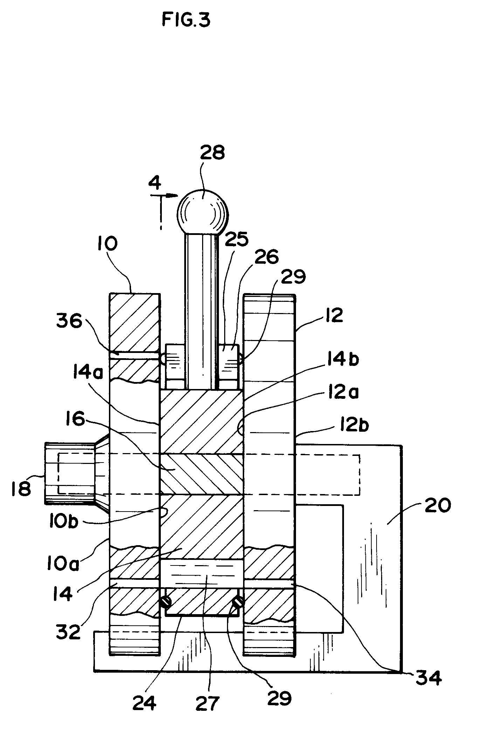

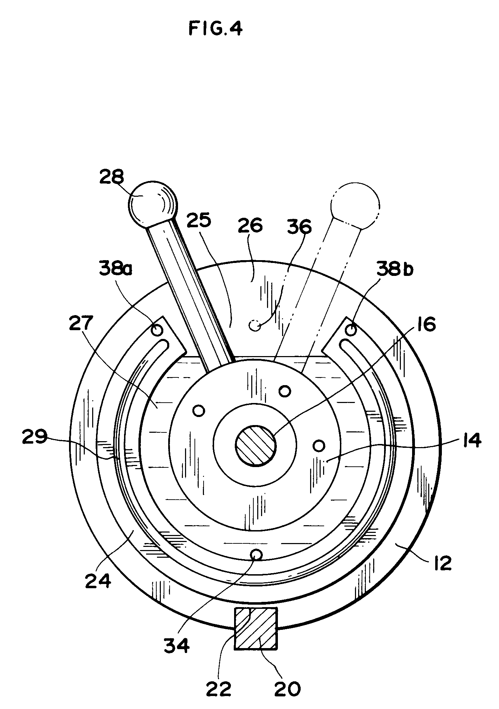

Figs. 3 and 4 show the main parts of a sampling valve in accordance with the present invention. For ease of understanding, the driving source is not shown.

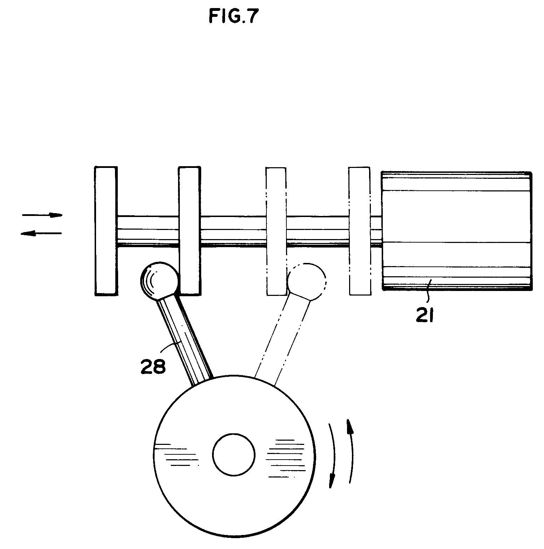

The movable element of the sampling valve is a rotary element 14. The rotary element 14 is disposed between fixed elements 10, 12 and all three elements are concentrically mounted on a shaft 16. A fixing piece 20 keys together the shaft 16 and the fixed elements 10, 12 and a clamping piece 18 presses the three elements against the fixing piece 20. A driving source 21 (see Fig. 7) engages an arm 28 to rotate the rotary element 14. A liquid chamber 27 extends round the outer circumferences of sliding surfaces 10b, 14a, 14b, 12a of the fixed elements 10, 12 and the rotary element 14. The fixed elements 10, 12 have notches 22 in which key portions of the fixing piece 20 fit. The liquid chamber 27 has an upper opening 26 through which passes the arm 28.

The sampling valve has two states. The first state is the initial state, which is the sample suction mode. The second state is the changeover state, which is the sample delivery mode. Around the outside of the rotary element 14 there is an enclosure 24. This enclosure 24 is a short cylindrical member having an upper opening 25. The opening 25 of the enclosure 24 forms the opening 26 of the liquid chamber 27. The inner diameter of the enclosure 24 is slightly larger than the outer diameter of the rotary element 14, and the outer diameter of the enclosure 24 is slightly smaller than the outer diameter of the fixed elements 10, 12. By moving the arm 28 within the opening 25 of the enclosure 24, the rotary element 14 can be rotated.

In Fig. 4, the arm 28 drawn with solid lines is in the first state (sample suction state) and the arm 28 drawn with two-dot chain lines is in the second state (sample delivery state). Between the front and rear sides of the enclosure 24 and the fixed elements 10, 12, sealing materials (for example, seals 29) are provided. The seals 29 maintain an airtight seal between the enclosure 24 and the fixed elements 10, 12. As a result, the liquid chamber 27 with its opening 26 is formed around the rotary element 14. The enclosure 24 and seals 29 may be replaced by a single resilient (e.g. rubber) body. This has the advantage of reducing the number of parts.

The fixed element 12 is provided with an inlet passage 34 for a cleaning solution and the fixed element 10 has an outlet passage 32 for the cleaning solution. These passages 32, 34 communicate with the liquid chamber 27. The fixed element 10 also has an overflow passage 36. The position of the passage 36 is indicated by a two-dot chain line in the opening 26 in Fig. 4. Pins 38a, 38b are provided on the enclosure 24 and they hold the enclosure 24 in position by extending into holes (not shown) in the fixed element 10.

The driving source 21 may be an air cylinder. Because the rotary element 14 is rotated by the arm 28, only a small force is needed. The arm 28 moves by reciprocating within the opening 25 of the enclosure 24.

The entire sampling valve is shown in Fig. 7 and is fixed to the main body of an automatic analyzer (not shown).

In this embodiment, the fixed elements 10, 12 and the rotary element 14 are made of porous ceramic. The three elements 10, 12, 14 are in disc form and have flat planes 10a and 10b, 12a and 12b, and 14a and 14b on their front and rear sides, respectively. The flat planes 10b, 12a, 14a, 14b are well-polished smooth surfaces, and the planes 10b and 14a, and 12a and 14b, rub against each other. As the rotary element 14 rotates and moves relative to the fixed elements 10, 12, the first state and second state are formed.

Fig. 5 is a magnified sectional view of the sliding parts of the fixed element 10 and rotary element 14.

In addition to the liquid chamber 27 disposed round the outside of the sliding surfaces 10b and 14a, there is a small wedge-shaped recess 15 which has walls which widen in the radially outwards direction from the outer circumferential edges of the sliding surfaces 10b and 14a. In Fig. 5, a C plane 15a is formed in the outer circumferential edge of the rotary element 14 and extends in the radial direction. Instead of the C plane, an R plane may be used.

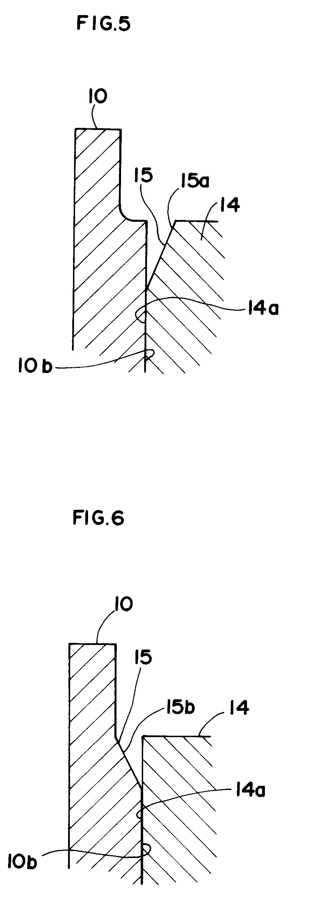

Fig. 6 shows an alternative to Fig. 5. In Fig. 6, a C plane 15b is formed round the sliding surface 10b of the fixed element 10. Instead of the C plane, an R plane may be used.

because the outer edges of the sliding surfaces are surrounded by tapered recesses 15, the cleaning solution is easily able to permeate between the sliding surfaces. The cleaning solution acts as a lubricant and prevents sticking of the sampling valve.

Embodiments of sampling valves in accordance with the present invention offer the following benefits:

(1) because a tapered recess leads to each pair of sliding surfaces of the movable and fixed elements, the cleaning solution in the liquid chamber is more easily able to permeate between the sliding surfaces, to act as a lubricant to prevent the sampling valve from sticking.

(2) The cylindrical enclosure which forms the liquid chamber has an opening so that a radially extending arm couples the driving source to the movable element. Thus, the sampling valve may be operated by using a small force.

Having described preferred embodiments of the invention with reference to the accompanying drawings, it is to be understood that the invention is not limited to those precise embodiments, and that various changes and modifications may be made by one skilled in the art without departing from the invention.

**Claims**

1. A sampling valve for sampling a liquid specimen, comprising:

a movable element (14) which has at least one liquid specimen distribution hole and is positioned between two fixed elements (10, 12) having liquid specimen distribution holes;

a liquid chamber (27) extending round the outer periphery of at least one pair of sliding surfaces (10b, 14a, 14b, 12a) of the fixed and movable elements (10, 12, 14); and

a recess (15) for each pair of sliding surfaces, the recess having walls (15a, 15b) which diverge as they extend away from the outer periphery of the pair of sliding surfaces.

2. A sampling valve according to claim 1, wherein the fixed elements (10, 12) have passages (32, 34) for adding liquid to and draining liquid from the liquid chamber (27) and an overflow passage (36) for the liquid chamber (27).

3. A sampling valve according to claim 1 or 2, further comprising an enclosure (24) extending round the outer periphery of the movable element (14), with the liquid chamber (27) being defined between the enclosure and the movable element and the ends of the enclosure (24) being sealed against the fixed elements (10, 12).

4. A sampling valve according to claim 3, wherein the movable element (14) is a rotatable element.

5. A sampling valve according to claim 4, further comprising an arm (28) projecting outwardly from the outer periphery of the movable element (14) and through an opening (25) in the enclosure (24) for rotating the movable element when the arm is rotated by a driving source (21).

6. A sampling valve according to claim 5, further comprising a driving source (21) connected to the arm (28).

7. A sampling valve according to any one of claims 3 to 6, wherein the enclosure (24) is cylindrical.

8. A sampling valve according to any one of claims 1 to 7, wherein the movable and fixed elements (10, 12, 14) are disc shaped and each liquid specimen distribution hole extends between the front and rear faces of its associated movable or fixed element (10, 12, 14).

9. A sampling valve according to any one of claims 1 to 8, wherein each recess (15) extends completely around the outer periphery of its associated pair of sliding surfaces (10b, 14a, 14b, 12a).

FIG.1    PRIOR  ART

FIG.2   PRIOR ART

FIG.3

FIG.4

FIG.5

FIG.6

FIG.7

28

2I